# FASCICULE DE BREVET EUROPEEN

(11) **EP 4 033 361 B1**
(45) Date de publication et mention de la délivrance du brevet: **06.09.2023**
(21) Numéro de dépôt: 21305087.5
(22) Date de dépôt: 25.01.2021
(51) Int. Cl.: G06F 11/07

(54) **PROCÉDÉ ET DISPOSITIF DE DÉTERMINATION D'AU MOINS UNE MACHINE IMPLIQUÉE DANS UNE ANOMALIE DÉTECTÉE DANS UNE INFRASTRUCTURE INFORMATIQUE COMPLEXE**
VERFAHREN UND VORRICHTUNG ZUR BESTIMMUNG MINDESTENS EINER MASCHINE, DIE AN EINER IN EINER KOMPLEXEN IT-INFRASTRUKTUR ENTDECKTEN ANOMALIE BETEILIGT IST
METHOD AND DEVICE FOR DETERMINING AT LEAST ONE MACHINE INVOLVED IN AN ANOMALY DETECTED IN A COMPLEX COMPUTER INFRASTRUCTURE

(43) Date de publication de la demande: 27.07.2022
(73) Titulaire: BULL SAS, 78340 Les Clayes-sous-Bois (FR)
(72) Inventeur: SEROUL, Pierre, 38650 Sinard (FR); DYNOMANT, Emeric, 38100 Grenoble (FR); MENAGER, Maxence, 38000 Grenoble (FR)
(74) Mandataire: Cabinet Camus Lebkiri

(56) Documents cités:
- EP-A1- 3 489 831
- US-A1- 2020 073 778
- BORGHESI ANDREA ET AL: "Online Anomaly Detection in HPC Systems", 2019 IEEE INTERNATIONAL CONFERENCE ON ARTIFICIAL INTELLIGENCE CIRCUITS AND SYSTEMS (AICAS), IEEE, 18 mars 2019 (2019-03-18), pages 229-233, XP033578858, DOI: 10.1109/AICAS.2019.8771527 [extrait le 2019-07-24]

## Description

### DOMAINE TECHNIQUE DE L'INVENTION

Le domaine technique de l'invention est celui des infrastructures informatiques complexes.

L'invention a pour objet un procédé et dispositif de détermination d'au moins une machine impliquée dans une anomalie détectée dans une infrastructure informatique complexe.

Par infrastructure complexe on entend un calculateur haute performance aussi appelé HPC (pour High Performance Computing) ou des parcs de serveurs d'entreprises. De telles infrastructures sont aussi appelées des clusters de calcul. De telles infrastructures sont complexes car le nombre de machines qu'elles comportent se compte dans certains cas en millier. On parle ici indifféremment de machine ou de noeud de calcul.

La présente invention concerne l'analyse d'anomalie et en particulier la détermination de la ou des machines responsables de l'apparition d'une anomalie.

### ARRIERE-PLAN TECHNOLOGIQUE DE L'INVENTION

Les calculateurs « High Performance Computing » (HPC) ou les parcs de serveurs d'entreprises sont des systèmes complexes permettant la parallélisation de sous-tâches connexes d'un service donné. Les incidents sur ce type d'équipement sont très préjudiciables pour les utilisateurs finaux (redémarrage lent et compliqué, consommation accrue d'énergie, perte de services, etc.) et leur prédiction/détection permet à l'équipe d'administration d'anticiper ou d'améliorer la résolution de ces problèmes.

On connait des solutions comme CDC pour « Cognitive Data Center » (soit Centre de Données Cognitif). Cette solution particulière est décrite sur le site dont l'url est https://atos.net/fr/solutions/codex-ai-suite. Une telle solution permet la mise en place de pipelines de détection/prédiction d'incidents sur ce type d'équipement. En utilisant des métriques systèmes (utilisation du processeur, de la mémoire vivre, des lectures et/ou écritures disque, consommation énergétique, etc.) ou des logs (systèmes, applicatifs, etc.), les anomalies peuvent être détectées en temps réel et remontées aux administrateurs.

En informatique, un log correspond à une journalisation d'activité d'un processus. Ce log, ou journal, est créé par un enregistrement séquentiel dans un fichier ou une base de données de tout ou partie de l'activité du processus. Un log ou journal désigne le fichier où sont enregistrés ces enregistrements. Ces enregistrements sont datés. Pour un fichier de log donné, différentes lignes peuvent avoir différentes sémantiques. Dans la pratique on utilise le terme log pour désigner un fichier/journal de logs ou une ligne de log. Une ligne de log est une ligne d'un fichier/journal de logs.

Or, une telle détection ne prend réellement de sens pour un utilisateur final que lorsque celle-ci peut mener à la résolution du problème, ou a minima à son identification fine. Une indication d'ordre général telle que « le cluster va subir un incident » est en effet beaucoup moins pertinente qu'une indication plus spécifique telle que « le noeud X du cluster s'éloigne de son comportement nominal ».

Dans l'état de la technique, aucun système ne permet de traiter simultanément, au sein d'un même modèle de détection, des données hétérogènes (numériques, textuelles ou topologiques) comme par exemple les logs, les métriques et l'infrastructure réseau. Or seule une analyse simultanée de toutes des informations permet de détecter les pannes systémiques.

Dans l'état de la technique, on note aussi que les objectifs de sensibilité (utilisation de toutes les métriques disponibles) et de spécificité sont a priori opposés. Il est important d'utiliser le plus de sources d'informations possible pour maximiser les chances de détection, mais la multiplication des sources dilue l'information et rend difficile l'identification des causes de l'incident.

Les solutions proposées dans l'état de la technique se focalisent souvent non pas sur la détection d'incidents sur la machine, mais sur la surveillance des performances de celle-ci. Ainsi, un opérateur technique est nécessaire afin de suivre les constantes de l'équipement et de réagir en fonction. On note que dans le domaine de l'invention, on utilise le terme monitoring pour désigner la surveillance.

On connaît par exemple la solution « Nagios », visible sur le site web dont l'url est https://www.nagios.org/, qui est un outil de monitoring système générique. Il est focalisé sur les métriques système uniquement.. Une des difficultés associées à Nagios est que ses capacités de prédictions sont basées sur des modules d'extensions, aussi appelés plugins, développés par la communauté. Il y a donc peu de suivi des versions, une documentation relativement pauvre, des techniques de détection d'anomalies peu élaborées comme le dépassement de seuil ou la décorrélation, etc...

On connaît également la solution Zabbix qui est un autre logiciel de monitoring visible sur le site web dont l'url est https://www.zabbix.com/. Comme Nagios, il se focalise uniquement sur les métriques et s'appuie sur sa bibliothèque de plugins pour proposer des possibilités de détection d'anomalies.

Bien que très utilisées, ces solutions n'ont pas pour but premier la détection d'anomalies mais plutôt un monitoring unifié des métriques d'un système complexe. De nouveaux acteurs sont récemment apparus avec des possibilités natives de détection d'anomalies via des algorithmes d'apprentissage mais toujours basés sur des métriques systèmes et non des logs.

Quelques autres solutions utilisent cependant des logs comme entrée de leurs algorithmes. La solution Zebrium (visible sur le site web dont l'url est https://www.zebrium.com/) par exemple, détecte des changements de saisonnalité ou de fréquence d'apparitions de certains patterns de logs. Cependant, cette solution ne s'intéresse qu'à une seule machine à étudier et ne prend donc pas en compte les possibilités de monitoring d'un parc de serveurs hébergeant une application unique ou d'un système HPC comportant plusieurs noeuds de calcul.

La solution « Log Anomaly Detector » est un ensemble d'outils trouvés sur un répertoire Github affilié à RedHat. Cette solution « open source » utilise des techniques modernes pour la représentation des logs. Focalisée sur les machines uniques, elle classifie les logs en deux classes (positifs et négatifs) et lève un incident lorsque la proportion de logs négatifs augmente.

D'autres solutions n'ont pas été implémentées en bonne et due forme mais sont simplement décrites dans des journaux scientifiques. Ce champ d'étude est relativement récent.

En 2017, Dani et al. («K-means Application for Anomaly Détection and Log Classification in HPC») ont détecté les anomalies grâce à un algorithme de groupement utilisant une méthode KMeans. Les auteurs utilisent des logs pour définir un cluster de « normalité ». Si beaucoup de logs échappent à ce cluster « normal », une anomalie est alors indiquée. Or, lors d'incidents touchant par exemple le système de fichiers d'un HPC, tous les noeuds vont sortir de leur comportement nominal et l'anomalie devient la règle. La même année, Tuncer et al. («Diagnosing Performance Variations in HPC Applications Using Machine Learning») proposaient un apprentissage supervisé sur les métriques pour arriver au même résultat. De plus, ces systèmes fonctionnent en utilisant les ressources des noeuds hôtes, ce qui réduit les performances des noeuds hôtes pour toutes leurs tâches.

En 2019, Borguesi et al. («Online Anomaly Détection in HPC Systems») ont imaginé un système installé directement sur les cartes de contrôle des noeuds (technologie dite du calcul en périphérie ou « edge computing ») afin de diminuer l'impact sur les performances globales. Utilisant uniquement les métriques, c'est le premier système trouvé faisant état de score d'anomalie pour chaque noeud du cluster.

Peu de travaux universitaires font état de l'utilisation de logs pour la détection d'anomalies. On peut cependant noter que Farzad et al. («Unsupervised log message anomaly detection») ont, en 2020, utilisé des modèles de logs, puis la fréquence d'apparition de chaque modèle pour détecter des anomalies dans un flux de log unique. Cependant, la détection était basée sur une première classification « positive / négative » de chaque log. Il y a donc un travail considérable de classification préalable des logs à effectuer.

EP3489831 décrit un procédé de détermination si une machine a présenter une anomalie. Des moyens d'apprentissage déterminent une règle qui définit une corrélation entre des anomalies déterminées et un indicateur. Des moyens de surveillance analysent périodiquement des données nouvellement générées en vérifiant si une valeur de l'indicateur, déterminée à partir des ces données, satisfait la règle afin de prédire l'occurrence de ladite anomalie.

### RESUME DE L'INVENTION

L'invention offre une solution aux problèmes évoqués précédemment, en permettant une mise en place hors bande sans consommer de ressource de calcul dans l'infrastructure informatique complexe. Selon l'invention, on entend par « hors bande » le fait de ne pas utiliser les ressources de travail de l'infrastructure mais d'utiliser des ressources dédiées à la gestion de l'infrastructure.

Un aspect de l'invention concerne un procédé de détermination d'au moins une machine impliquée dans une anomalie détectée dans une infrastructure informatique comportant une pluralité M de machines, M étant un entier strictement supérieur à 1, ledit procédé étant caractérisé en ce qu'il comporte les étapes suivantes mises en oeuvre automatiquement :
- Configuration d'une structure de vecteur d'état de dimension N d'une machine, N étant un entier strictement supérieur à 2, ladite structure répartissant dans les N dimensions des informations de type métrique et des informations de type log ;
- Détermination d'une durée de fenêtre temporelle ;
- Acquisition de données horodatées d'exploitation selon la configuration du vecteur d'état et de la durée fenêtre temporelle ;
- Construction d'un vecteur d'état, pour chacune des M machines à partir des données horodatées acquises, selon la structure de vecteur d'état configurée, ladite construction comportant les étapes suivantes :
   - Numérisation des données acquises selon la configuration du vecteur d'état ;
   - Normalisation des données numérisées ;
   - Agrégation des données par dimension ;
- Assemblage des M vecteurs de dimension N en un vecteur d'infrastructure ;
- Détection d'une anomalie par application d'un procédé de détection d'anomalie au vecteur d'infrastructure ;
- Pour l'anomalie détectée, le procédé comporte en outre les étapes supplémentaires suivantes :
   - Application d'une méthode d'explicabilité sur le vecteur d'infrastructure produisant un vecteur d'explication d'infrastructure comportant M vecteurs d'explication de machine de dimension N ;
   - Séparation du vecteur d'explication par machine ;
   - Pour chaque machine, agrégation des composantes du vecteur d'explication pour obtenir un indicateur d'implication ;
   - Détermination de la machine ayant l'indicateur le plus important, ladite machine déterminée étant alors considérée comme impliquée dans l'anomalie.

Grâce à l'invention on obtient une approche plus globale et comblant les lacunes de l'état de la technique. On entend ici par « approche plus globale » une approche prenant en compte toute l'information disponible pour l'infrastructure.

Premièrement, le procédé selon l'invention utilise les logs en combinaison avec les métriques au sein d'une représentation jointe de ces données hétérogènes. En effet, la grande majorité des études ou projets connus n'utilisent que l'un ou l'autre de ces types de données. Or, ils sont les deux faces d'une même pièce : si une machine d'un parc serveur provoque une anomalie, ses logs devraient l'indiquer tout autant que ses métriques systèmes.

Ensuite, le procédé selon l'invention permet de conserver la sémantique profonde du log. En effet, les développeurs indiquent de nombreux éléments dans leurs messages de logs suivant les différents niveaux (info, debug, warning, error, etc.). Une ligne de log typique comporte : timestamp, niveau, application, machine, message. Le message lui-même est structuré ou en langage naturel. Il n'est pas possible qu'une simple extraction de modèle puisse refléter cette complexité. Cette conservation est obtenue par le mode de numérisation des logs.

En outre, le procédé selon l'invention est capable de détecter des anomalies au niveau d'un cluster entier, ou d'un parc de serveurs dédiés à la même application. En effet, cette détection fait plus de sens si on la regarde du côté exploitation : un ensemble de machines est souvent responsable d'une tâche précise, d'une application plus large. C'est cette application globale qui est critique et dont l'arrêt sera préjudiciable. L'invention permet d'appréhender un ensemble de machines comme une seule application.

En outre, du côté métier, l'invention permet de remonter à la machine source du problème. Une fois que l'application mère est tombée, le temps de résolution du problème sera d'autant plus rapide que l'identification de celui-ci sera rapide : savoir quelle est la machine responsable paraît être la première question à laquelle répondre avant de lancer des RCA (« Root Cause Analysis » ou analyse de cause racine) plus ciblée sur cet équipement. Un tel résultat est également obtenu par l'invention.

L'invention permet ainsi à la fois d'obtenir un indicateur unique du comportement de l'infrastructure mais également d'identifier la ou les machines responsables lorsque ce comportement est détecté comme anormal, tout ceci sans nécessiter ou utiliser la puissance de calcul de la machine hôte et en étant assez scalable pour une utilisation en production.

Outre les caractéristiques qui viennent d'être évoquées dans le paragraphe précédent, le procédé selon l'invention peut présenter une ou plusieurs caractéristiques complémentaires parmi les suivantes, considérées individuellement ou selon toutes les combinaisons techniquement possibles :
- Les données d'exploitation acquises comportent des métriques et des lignes d'au moins un fichier de journalisation d'activité ;
- Les informations de type log sont numérisées en utilisant un procédé choisi parmi les procédés suivants : Word2VEC, BERT, GloVe ;
- L'agrégation des données d'exploitation numérisées se fait en utilisant sur lesdites données un procédé choisi parmi les suivants : moyenne, quartile, minimum, maximum ;
- La fenêtre temporelle a une durée comprise entre une minute et une heure ;
- La fenêtre temporelle a une durée comprise entre une minute et dix minutes ;
- Un vecteur d'état a une dimension N comprise entre cinquante et cent ;
- Un vecteur d'état a une dimension N telle que le produit NxM de la dimension par le nombre de machine n'excède pas un million ;
- Le procédé de détection d'anomalie, appliqué au vecteur d'infrastructure, est choisi parmi l'un des procédés suivants : auto-encoder et enveloppe elliptique, « isolation-forest », OCSVM ;
- Le procédé d'explicabilité, appliqué au vecteur d'infrastructure, est choisi parmi les procédés suivants : Shap, Lime, couche d'attention des réseaux de neurones ;
- L'agrégation des composantes des vecteurs d'explication se fait en utilisant, sur lesdites composantes, un procédé choisi dans la liste formée d'au moins : moyenne, quartile, minimum, maximum ;

Un autre aspect de l'invention concerne un produit-programme d'ordinateur comprenant des instructions qui, quand le programme est exécuté sur un ordinateur, conduisent celui-ci à mettre en oeuvre des étapes d'un procédé selon une combinaison quelconque des caractéristiques précédemment citées.

Un autre aspect de l'invention concerne un support d'enregistrement sur lequel est enregistré un programme d'ordinateur pour la détermination d'au moins une machine la plus directement impliquée dans une anomalie détectée dans une infrastructure informatique selon le paragraphe précédent.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention. Les figures montrent :
[Fig. 1] une représentation schématique d'une infrastructure informatique complexe.
[Fig. 2] Une illustration d'étapes du procédé selon l'invention.

### DESCRIPTION DETAILLEE

Dans cette description, lorsque l'on attribue une action à un dispositif, cette action est réalisée par des moyens de calcul dudit dispositif mettant en oeuvre des codes instructions, aussi appelés codes exécutables, enregistrés dans une mémoire de stockage dudit dispositif. De même, lorsqu'un dispositif communique, cela signifie qu'il émet et/ou reçoit des messages via une interface de communication. Ces messages sont produits et/ou traités par des moyens de calcul dudit dispositif.

On peut également attribuer une action à une application, ou à un logiciel. Application ou logiciel signifie toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

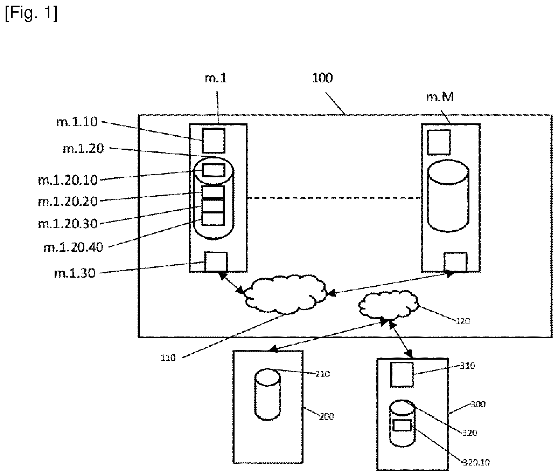

[Fig. 1] montre une représentation schématique fonctionnelle d'une infrastructure 100 informatique complexe. Une infrastructure informatique complexe peut être un centre de données, un super calculateur, un réseau de serveurs d'entreprise... la liste n'est pas limitative. Une infrastructure complexe se caractérise, entre autres, par le nombre de machines qu'elle comporte. Dans une telle infrastructure le nombre de machines se dénombre en milliers et même plusieurs dizaines de milliers.

Selon le contexte, les machines peuvent être appelées machines, serveurs, noeuds, lames.

On note que l'invention peut être utilisée avec des infrastructures comportant moins de machines.

Sauf précision contraire, un même élément apparaissant sur des figures différentes présente une référence unique.

[Fig. 1] montre que l'infrastructure 100 informatique complexe comporte :
- Une pluralité de machines, ici M machines, l'ordre de grandeur de M ayant déjà été défini. Les machines sont désignées par m.i avec i entier variant de 1 à M. Les machines sont fonctionnellement identiques. Dans un exemple illustratif, considérons que M vaut dix mille.
- Un réseau 110 d'interconnexion qui permet aux M machines de communiquer entre elles.
- Un réseau 120 de maintenance qui permet à un superviseur, de communiquer avec les M machines via des interfaces de communication non représentées.

II arrive que le réseau d'interconnexion soit également utilisé comme réseau de maintenance.

[Fig. 1] montre que la machine m.1 comporte :
- Des moyens m.1.10 de calcul, par exemple un microprocesseur, un microcontrôleur, un circuit spécialisé... la liste n'est pas exhaustive ;
- Des moyens m.1.20 de stockage : par exemple un disque dur, un disque SSD, un disque réseau... la liste n'est pas exhaustive. Les moyens de stockage sont représentés de manière unifiée mais il peut s'agir de plusieurs unités logiques réparties sur plusieurs dispositifs physiques.
- Une interface m.1.30 de communication compatible avec le réseau d'interconnexion 110 du l'infrastructure 100 informatique complexe. Une telle interface est, par exemple, une interface Ethernet, du type « fibre channel », ou toute autre interface adaptée aux infrastructures informatiques complexes.

[Fig. 1] montre que les moyens m.1.20 de stockage de la machine m.1 comporte plusieurs zones parmi lesquelles :
- Une zone m.1.20.10, dite zone codes instructions, comportant des codes instructions mis en oeuvre par les moyens m.1.10 de calcul de la machine m.1. Cette zone codes instructions inclut un système d'exploitation et des applications ;
- Une zone m.1.20.20, dite zone sondes, comportant des codes instructions permettant de produire des métriques ou des entrées de fichiers de journalisation. Dans la pratique ces codes instructions sont : inclus dans le système d'exploitation et/ou inclus dans les applications et/ou ajoutés via des connecteurs logiciels existant dans le système d'exploitation et/ou les applications.
- Une zone m.1.20.30 de stockage de valeur de métriques ;
- Une zone m.1.20.40 de stockage de fichiers journaux.

On insiste ici sur la différence entre métrique et fichier de journalisation d'activité. En effet les métriques peuvent être journalisées, ce qui pourrait conduire à les considérer comme faisant partie des journaux d'activité. Une métrique renseigne sur l'état d'un composant matériel ou logiciel d'une machine, par exemple le nombre d'accès disque. Cette métrique peut être déclinée par processus, par exemple le nombre d'accès disque pour le processus dont le pid (« process identifier ») est 12584. Une métrique, ou information de type métrique, associe donc une date et une valeur, l'interprétation de la valeur étant faite par la nature de la métrique.

A contrario, une ligne d'un fichier journal, ou information de type log, est, par exemple :
2018-07-11 13:20:56 192.168.1.150 GET/favicon.ico - 80 - 192.168.1.106 Mozilia/5.0+(Windows+NT+10.0;+Win64;+x64;+rv:61.0)+Gecko/20100101+Firefox/6 1.0 - 200 0 0 15.

Dans cette ligne, les informations sont séparées par des espaces. Cette ligne nous indique, entre autres, à quelles date et heure, et avec quelle méthode, a été demandé un fichier nommé favicon.ico. Cette ligne nous indique aussi que la réponse a été émise en 15ms. Une telle ligne est donc beaucoup plus riche qu'une simple métrique. Il existe de nombreux journaux d'activité avec des degrés de verbosité divers et avec des informations variées. Ces informations sont parfois laissées à l'imagination des développeurs. L'invention permet de traiter ce type d'information dans sa détection d'anomalie. L'invention permet donc de traiter les journaux applicatifs dont le format est : inconnu a priori et/ou non standardisé au niveau du système d'exploitation. Ici par non standardisé on vise le contenu plus que la forme. On note cependant que l'invention traite aussi bien les journaux non standards dans leur forme, c'est-à-dire dans leur structure, que les journaux standards. Cela est d'autant plus pertinent que la forme du log est définie par l'utilisateur au moment où il configure l'application qui produit ledit log. D'une mise en oeuvre du produit à l'autre, la forme du log n'est donc pas stable. L'invention permet de s'adapter à cette situation.

[Fig. 1] montre une machine 200 d'état connectée au réseau de maintenance de l'infrastructure 100 informatique complexe. De manière fonctionnelle, la machine 200 d'état comporte une base de données 210 qui permet l'enregistrement horodaté des fichiers journaux et des métriques produits par les machines de l'infrastructure informatique complexe. Parmi des systèmes de collecte existant, on peut citer par exemple LogStach ou Kibana.

Une telle infrastructure informatique complexe connectée à une machine d'état est bien connue de l'homme du métier.

[Fig. 1] montre une machine 300 d'analyse, fonctionnellement identique aux machines précédemment décrites, comportant :
- Des moyens 310 de calcul ;
- Des moyens 320 de stockage comportant au moins une zone 320.10 comportant des codes instructions pour la mise en oeuvre du procédé selon l'invention.

[Fig. 1] montre que la machine 300 d'analyse est connectée au réseau 120 de maintenance de l'infrastructure 100 informatique complexe. Cela permet à la machine 300 d'analyse de lire les données enregistrées dans la base 210 de données de la machine 200 d'état. Dans la pratique il existe au moins deux autres possibilités pour permettre à la machine 300 d'analyse de lire les données enregistrées dans la base 210 de données :
- Il existe un autre réseau, non représenté, permettant aux machines d'état et d'analyse de communiquer ;
- La machine d'analyse est connectée de telle sorte qu'elle peut aller lire les informations à la source, c'est-à-dire directement sur les machines de l'infrastructure complexe.

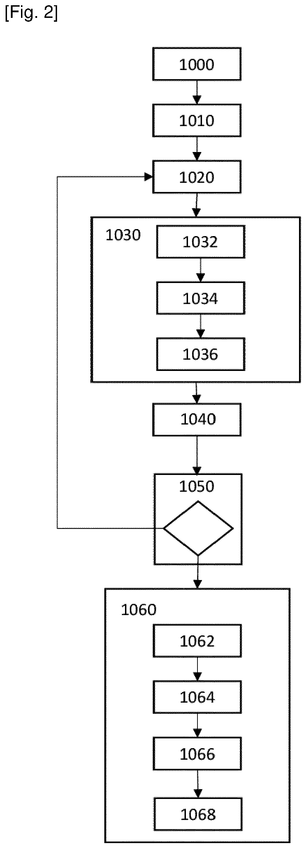

[Fig. 2] montre une étape 1000 préliminaire de configuration d'une structure de vecteur d'état de dimension N. N est un entier strictement supérieur à 2. Il faut en effet au moins 2 dimensions pour utiliser des informations de type log et des informations de type métrique. Il s'agit d'une étape de paramétrage du procédé selon l'invention. Selon l'invention, un vecteur d'état décrit une machine en utilisant N valeurs numériques. Configurer un vecteur d'état revient à faire les choix de paramétrage suivants :
- Quelle dimension N pour le vecteur d'état : l'invention est particulièrement adaptée pour une dimension entre 50 et 100. Dans l'exemple on choisit 70. Ces nombres sont dépendant de la puissance de calcul disponible pour effectuer l'analyse. Ils correspondent à un processeur i5 de 10eme génération avec 8Go de RAM. On peut donc avoir plus de 100 dimensions avec plus de puissance de calcul ;
   - Comment on répartit les dimensions entre les métriques et les fichiers de journalisation. Par exemple on prend 20 dimensions pour les fichiers de journalisation et 50 pour les métriques ;
- Quels journaux de logs pour alimenter les dimensions correspondant à des fichiers de journalisation. On admet en général qu'il y a un fichier par application. On peut affecter un ou plusieurs fichiers de journalisation à une ou plusieurs dimensions. Dans une exemple chaque log sélectionner contribue à toutes les dimensions correspondant à des fichiers de journalisation. On peut utiliser tout ou partie d'un fichier de journalisation, par exemple en filtrant sur le niveau de message.
- Quelle méthode utiliser pour la numérisation des lignes de fichiers de journalisation ;
- Quelles métriques utiliser pour alimenter les dimensions correspondant à des métriques dans le vecteur d'état. Des métriques classiques sont, par exemple : fréquence CPU (Hz), mémoire RAM utilisée (Go), nombre d'accès en lecture a un disque dur, mémoire SWAP utilisée (Go), température du CPU (°C), consommation électrique du CPU (W). La liste n'est pas exhaustive. Une liste plus exhaustive peut être visualisée, par exemple, en configurant en analyse de performance sur une machine exécutant le système d'exploitation « Windows ». Cette liste correspond alors aux compteurs de performance. Una autre liste peut être obtenu par la configuration par défaut de l'outils de surveillance système « Telegraf ».

Parmi les méthodes utilisables pour numériser une ligne d'un fichier de journalisation on compte au moins :
- Word2VEC,
- BERT, et
- GloVe.

Chacune de ces méthodes permet de transformer un mot, ou une phrase, en un vecteur dont la dimension dépend de la configuration de la méthode choisie. Dans l'exemple de la description on configure la méthode pour produire un vecteur de dimension 20 conformément à la répartition des dimensions du vecteur d'état.

Selon la mise en oeuvre de l'invention on numérise toute la ligne, sans les informations d'horodatage qu'elle peut contenir, ou seulement certaines parties de la ligne. On rappelle que classiquement une ligne d'un fichier de journalisation est composée de plusieurs champs séparés par un caractère de délimitation. Il est donc aisé de désigner un champ par son rang dans la ligne. On trouve aussi des entrées de journaux en json ou en xml. Cela reste fonctionnellement identique à une ligne avec délimiteur.

Dans une variante de l'invention on utilise une représentation par graphe pour effectuer la numérisation. Dans cette variante on représente l'infrastructure informatique complexe comme un graphe et on utilise celui-ci pour obtenir une représentation jointe des deux types de données. Par exemple les fichiers journaux sont des sommets du graphe, les métriques des attributs des sommets machines.

[Fig. 2] montre une étape 1010 de détermination d'une fenêtre temporelle. Il s'agit d'une étape de paramétrage du procédé selon l'invention. Dans l'invention on considère des fenêtres temporelles de l'ordre de la minute. Dans cette étape, on fixe la durée de la fenêtre temporelle qui sera considérée par le procédé selon l'invention dans les étapes ultérieures. Selon des modes de réalisations de l'invention cette durée est :
- Inférieure ou égale à dix minutes, ou
- Inférieure ou égale à une heure.

On note que l'invention peut être mise en oeuvre avec des fenêtres temporelles d'une durée plus grande mais cela diffère d'autant les prédictions. Il faut attendre la fin de la fenêtre pour avoir le résultat de l'analyse.

[Fig. 2] montre une étape 1020 d'acquisition de données horodatées d'exploitation. On rappelle que les données d'exploitation comportent au moins des métriques et du contenu issu de fichiers de journalisation d'activité.

Dans un mode de réalisation préféré de l'invention, les données d'exploitation sont acquises dans la base de données 210 d'état. D'un point de vue fonctionnel cette base de données permet de récupérer ces données via des enregistrements structurés, chaque enregistrement comportant au moins :
- Un marqueur temporel aussi appelé « timestamp » assimilable à une date comportant au moins des informations d'année, de mois, de jour, d'heure, de minute et de seconde. Souvent, une telle date comporte aussi des informations de millisecondes. Il s'agit par exemple du nombre de secondes écoulées depuis le premier janvier 1970 à minuit UTC. Pour l'invention on peut se satisfaire d'un marqueur temporel précis à la minute ;
- Un identifiant d'une machine d'où provient l'information ;
- Un identifiant de l'information. S'il s'agit d'une métrique alors c'est un identifiant de la métrique. S'il s'agit d'une ligne d'un fichier de journalisation alors, pour l'invention, un identifiant qualifiant la nature de l'information comme ligne de fichier de log suffit ;
- Une valeur pour l'information.

Pour récupérer ces données, on interroge la base de données en fonction de la fenêtre temporelle puis on regroupe ces données par machine et par dimension.

On passe alors à une étape 1030 de construction d'un vecteur d'état. Cette construction comporte les sous-étapes suivantes :
- Numérisation 1032 des données acquises selon les étapes de paramétrage ;
- Normalisation des valeurs numérisées ;
- Agrégation des valeurs normalisées.

On note que la normalisation peut être réalisée sur le résultat de l'agrégation.

L'agrégation se fait sur la durée de la fenêtre temporelle. L'agrégation peut être exclusive ou glissante. Par exclusive, on entend que chaque donnée appartient à une seule fenêtre temporelle. On a, dans le cas exclusif, une première fenêtre temporelle allant d'une date d1 à une date d2 égale à d1 plus la durée de la fenêtre temporelle. Une deuxième fenêtre temporelle suivante va de d2 à d2 plus la durée de la fenêtre temporelle. Dans une variante glissante, deux fenêtres temporelles successives peuvent se chevaucher.

Selon les variantes de l'invention, l'agréation peut être réalisée par au moins l'une des méthodes suivantes : moyenne, quartile, minimum, maximum... La liste n'est pas exhaustive. Le choix d'une de ces méthodes fait partie d'un paramétrage du procédé selon l'invention.

L'étape de normalisation permet d'avoir un vecteur homogène, c'est-à-dire avec les valeurs de toutes ses dimensions comprises dans un intervalle donnée, par exemple l'intervalle [-1 ;1] ou encore l'intervalle [0 ;1]. En particulier, cette normalisation doit être réalisée sur les métriques pour qu'elles soient du même ordre de grandeur que les sorties de la méthode de numérisation des lignes de fichier de journalisation. La normalisation se fait en fonction de valeurs statistiques sur un jeu de données vu à l'entrainement du modèle, ou en fonction d'une dynamique connue de la grandeur.

Une fois tous les M vecteurs d'état disponibles pour une fenêtre temporelle, on passe à une étape 1040 d'assemblage des M vecteurs d'état des machines pour obtenir un vecteur d'état de l'infrastructure.

On passe alors à une étape 1050 de détection d'une anomalie. Dans cette étape, on utilise le vecteur d'état comme entrée d'un procédé de détection d'anomalie. Dans l'invention, un tel procédé de détection d'anomalie est, par exemple, un auto-encodeur. Un tel auto-encodeur aura au préalable été entrainé sur un jeu de données correspondant à un fonctionnement normal de l'infrastructure informatique. Ce jeu de données correspond à une période la plus longue possible, par exemple 18 mois. Cependant, l'invention reste applicable même si on dispose d'une période plus courte, par exemple une semaine de données.

Pour la détection, on soustrait la sortie de l'auto-encodeur à son entrée et on soumet le résultat de cette soustraction à une enveloppe elliptique pour déterminer s'il y a une ou plusieurs valeurs anormales dans la sortie de l'auto-encodeur.

La sensibilité du procédé selon l'invention peut être réglée par exemple, en fonction du nombre de valeur requis pour être en anomalie. La sensibilité peut également être réglée sur la distance de laquelle les points s'éloignent de l'enveloppe.

Si une anomalie est détectée, par exemple si au moins un point sort de l'enveloppe, c'est-à-dire est anormalement situé pour la méthode de détection choisie, alors on passe à une étape 1060 de traitement de l'anomalie détectée. Sinon on retourne à l'étape 1020 d'acquisition de données pour commencer à traiter une autre fenêtre temporelle. Pour le traitement de l'anomalie, on peut aussi parler de précision de la détection.

On notera ici qu'avec la parallélisation des traitements, et les processeurs multicoeurs, il est possible de traiter simultanément une fenêtre temporelle et une anomalie détectée.

Dès la sortie de l'étape de détection, on a un gain par rapport à l'état de la technique. En effet, on est capable de détecter une anomalie en prenant en compte à la fois les métriques et les fichiers de journalisation.

Un avantage de cette détection est qu'elle est non supervisée, c'est à dire qu'elle ne nécessite pas d'analyse préalable de données. D'autres procédés de détection peuvent être utilisés avec l'invention. On cite par exemple des algorithmes suivants qu'il est possible de mettre en oeuvre pour réaliser cette détection :
- « isolation forest » également connue sous le nom de « forêt d'isolement » ;
- OCSVM qui est l'acronyme de « One Class Support Vector Machine » pour Machine à Vecteur de Support à Classe Unique.

L'étape 1060 de traitement d'anomalie comporte une étape 1062 d'explication de l'anomalie. Dans l'étape 1062 d'explication de l'anomalie, on utilise un procédé d'explicabilité choisi dans la liste comportant au moins les algorithmes :
- Shap ;
- Lime ;
- Couche d'attention des réseaux de neurones.

La liste du paragraphe précédent n'est pas exhaustive.

Grâce à l'étape de détection, on sait en effet quel sont les points de sortie à observer : ce sont ceux qui sont en anomalie. Pour déterminer les points d'entrée ayant pu provoquer cette anomalie, on peut donc utiliser un des procédés d'explicabilité précédemment cités.

A la fin du processus d'explication on obtient un vecteur d'explication d'anomalie d'infrastructure. Ce vecteur à la même structure que le vecteur d'état d'infrastructure : M vecteurs de dimension N.

On passe alors à une étape 1064 de séparation du vecteur d'explication d'infrastructure en M vecteurs d'explication machine. On parle aussi de déconcaténation. Il s'agit d'une étape symétrique de l'étape d'assemblage 1040.

On passe alors à une étape 1066 de calcul d'un indicateur d'implication pour chaque machine. Ce calcul se fait en agrégant, pour chaque machine les composantes du vecteur d'explication. Cette agrégation se fait, par exemple, en utilisant un procédé choisi parmi la liste comportant au moins : moyenne, quartile, minimum, maximum. Cette liste n'est pas exhaustive. Ce choix fait partie d'un paramétrage du procédé selon l'invention.

A la fin de l'étape 1066 de calcul d'indicateur d'implication on dispose d'un indicateur par machine, on passe alors à une étape 1068 de détermination de la machine la plus directement impliquée dans l'anomalie. Avec l'invention, ces indicateurs sont comparables entre eux.

Selon des variantes, dans l'étape 1068, on sélectionne la machine la plus directement impliqué de la façon suivante, autrement dit, celle qui a l'indicateur le plus important. L'importance d'un indicateur est mesurée comme étant le plus élevé. Dans d'autres variantes de l'invention, sélectionnent plusieurs machines par exemple en les classant par valeur d'indicateur, ou en comparant les indicateurs à un seuil.

Dans la variante où il y a un seuil, il est possible qu'aucune machine ne passe le seuil. Dans ce cas, il ne s'agit pas d'une anomalie.

Selon l'invention, il est donc possible de déterminer quelle machine fait passer une infrastructure informatique complexe en anomalie et ce en prenant en compte tous les types d'informations produits par la supervision de cette infrastructure. Ces types sont les métriques et les fichiers de journalisation d'activité aussi appelés fichier journaux ou logs.

## Revendications

1. Procédé de détermination d'au moins une machine impliquée dans une anomalie détectée dans une infrastructure informatique comportant une pluralité M de machines, M étant un entier strictement supérieur à 1, ledit procédé comportant les étapes suivantes mises en oeuvre automatiquement :
- Configuration (1000) d'une structure de vecteur d'état de dimension N d'une machine, N étant un entier strictement supérieur à 2, ladite structure répartissant dans les N dimensions des informations de type métrique et des informations de type log ;
- Détermination (1010) d'une durée de fenêtre temporelle ;
- Acquisition (1020) de données horodatées d'exploitation selon la configuration du vecteur d'état et de la durée fenêtre temporelle ;
- Construction (1030) d'un vecteur d'état, pour chacune des M machines à partir des données horodatées acquises, selon la structure de vecteur d'état configurée, ladite construction comportant les étapes suivantes :
∘ Numérisation (1032) des données acquises selon la configuration du vecteur d'état ;
∘ Normalisation (1034) des données numérisées ;
∘ Agrégation (1036) des données par dimension ;
- Assemblage (1040) des M vecteurs de dimension N en un vecteur d'infrastructure ;
- Détection d'une anomalie (1050) par application d'un procédé de détection d'anomalie au vecteur d'infrastructure ;
- Pour l'anomalie détectée, le procédé comporte en outre les étapes (1060) supplémentaires suivantes :
∘ Application (1062) d'une méthode d'explicabilité sur le vecteur d'infrastructure produisant un vecteur d'explication d'infrastructure comportant M vecteurs d'explication de machine de dimension N ;
∘ Séparation (1064) du vecteur d'explication par machine ;
∘ Pour chaque machine, agrégation (1066) des composantes du vecteur d'explication pour obtenir un indicateur d'implication ;
∘ Détermination de la machine ayant l'indicateur le plus important, ladite machine déterminée étant alors considérée (1068) comme impliquée dans l'anomalie.

2. Procédé de détermination d'au moins une machine impliquée dans une anomalie détectée dans une infrastructure informatique selon la revendication 1, **caractérisé en ce que** les données d'exploitation acquises comportent des métriques et des lignes d'au moins un fichier de journalisation d'activité.

3. Procédé de détermination d'au moins une machine impliquée dans une anomalie détectée dans une infrastructure informatique selon la revendication 1 **caractérisé en ce que** les informations de type log sont numérisées en utilisant un procédé choisi parmi les procédés suivants : Word2VEC, BERT, GloVe.

4. Procédé de détermination d'au moins une machine impliquée dans une anomalie détectée dans une infrastructure informatique selon l'une des revendications précédentes, **caractérisé en ce que** l'agrégation des données d'exploitation numérisées se fait en utilisant sur lesdites données un procédé choisi parmi les suivants : moyenne, quartile, minimum, maximum.

5. Procédé de détermination d'au moins une machine impliquée dans une anomalie détectée dans une infrastructure informatique selon l'une des revendications précédentes **caractérisé en ce que** la fenêtre temporelle a une durée comprise entre une minute et une heure.

6. Procédé de détermination d'au moins une machine impliquée dans une anomalie détectée dans une infrastructure informatique selon la revendication précédente **caractérisé en ce que** la fenêtre temporelle a une durée comprise entre une minute et dix minutes.

7. Procédé de détermination d'au moins une machine impliquée dans une anomalie détectée dans une infrastructure informatique selon l'une des revendications précédentes, **caractérisé en ce qu'**un vecteur d'état a une dimension N comprise entre cinquante et cent.

8. Procédé de détermination d'au moins une machine impliquée dans une anomalie détectée dans une infrastructure informatique selon l'une des revendications précédentes, **caractérisé en ce qu'**un vecteur d'état a une dimension N telle que le produit NxM de la dimension par le nombre de machine n'excède pas un million.

9. Procédé de détermination d'au moins une machine impliquée dans une anomalie détectée dans une infrastructure informatique selon l'une des revendications précédentes, **caractérisé en ce que** le procédé de détection d'anomalie, appliqué au vecteur d'infrastructure, est choisi parmi l'un des procédés suivants : auto-encoder et enveloppe elliptique, « isolation-forest », OCSVM.

10. Procédé de détermination d'au moins une machine impliquée dans une anomalie détectée dans une infrastructure informatique selon l'une des revendications précédentes, **caractérisé en ce que** le procédé d'explicabilité, appliqué au vecteur d'infrastructure, est choisi parmi les procédés suivants : Shap, Lime, couche d'attention des réseaux de neurones.

11. Procédé de détermination d'au moins une machine impliquée dans une anomalie détectée dans une infrastructure informatique selon l'une des revendications précédentes, **caractérisé en ce que** l'agrégation des composantes des vecteurs d'explication se fait en utilisant, sur lesdites composantes, un procédé choisi dans la liste formée d'au moins : moyenne, quartile, minimum, maximum.

12. Produit-programme d'ordinateur comprenant des instructions qui, quand le programme est exécuté sur un ordinateur, conduisent celui-ci à mettre en oeuvre les étapes du procédé selon l'une quelconque des revendications 1 à 10.

13. Support d'enregistrement sur lequel est enregistré un programme d'ordinateur pour la détermination d'au moins une machine la plus directement impliquée dans une anomalie détectée dans une infrastructure informatique selon la revendication 11.

## Patentansprüche

1. Verfahren zum Bestimmen mindestens einer Maschine, die an einer erkannten Anomalie in einer IT-Infrastruktur beteiligt ist, umfassend eine Vielzahl M von Maschinen, wobei M eine ganze Zahl ist, die streng größer als 1 ist, das Verfahren umfassend die folgenden automatisch implementierten Schritte:
- Konfigurieren (1000) einer Zustandsvektorstruktur mit Dimension N einer Maschine, wobei N eine ganze Zahl ist, die streng größer als 2 ist, wobei die Struktur in den N Dimensionen Informationen der Metrikart und Informationen der Logfile-Art verteilt;
- Bestimmen (1010) einer Dauer eines Zeitfensters;
- Erfassen (1020) von Betriebsdaten mit Zeitstempeln gemäß der Konfiguration des Zustandsvektors und der Dauer des Zeitfensters;
- Konstruieren (1030) eines Zustandsvektors für jede der M Maschinen aus den erfassten Daten mit Zeitstempeln gemäß der konfigurierten Zustandsvektorstruktur, die Konstruktion umfassend die folgenden Schritte:
o Digitalisieren (1032) der erfassten Daten gemäß der Konfiguration des Zustandsvektors;
o Vereinheitlichen (1034) der digitalisierten Daten;
o Zusammenfassen (1036) der Daten pro Dimension;
- Verbinden (1040) der M Vektoren der Dimension N zu einem Infrastrukturvektor;
- Erkennen einer Anomalie (1050) durch Anwenden eines Anomalieerkennungsverfahrens auf den Infrastrukturvektor;
- wobei für die erkannte Anomalie das Verfahren ferner die folgenden weiteren Schritte (1060) umfasst:
o Anwenden (1062) einer Erklärbarkeitsmethode auf den Infrastrukturvektor, wobei ein Infrastrukturerklärungsvektor erzeugt wird, umfassend M Erklärungsvektoren der Maschine der Dimension N;
o Trennen (1064) des Erklärungsvektors pro Maschine;
o für jede Maschine, Zusammenfassen (1066) der Komponenten des Erklärungsvektors, um ein Implikationskennzeichen zu erhalten;
o Bestimmen der Maschine, die das größte Kennzeichen aufweist, wobei die bestimmte Maschine dann als an der Anomalie beteiligt angesehen (1068) wird.

2. Verfahren zum Bestimmen mindestens einer Maschine, die an einer erkannten Anomalie in einer IT-Infrastruktur nach Anspruch 1 beteiligt ist, **dadurch gekennzeichnet, dass** die erfassten Betriebsdaten Metriken und Zeilen von mindestens einer Aktivitätsprotokolldatei umfassen.

3. Verfahren zum Bestimmen mindestens einer Maschine, die an einer erkannten Anomalie in einer IT-Infrastruktur nach Anspruch 1 beteiligt ist, **dadurch gekennzeichnet, dass** die Informationen der Logfile-Art unter Anwendung eines Verfahrens digitalisiert werden, das aus den folgenden Verfahren ausgewählt ist: Word2VEC, BERT, GloVe.

4. Verfahren zum Bestimmen mindestens einer Maschine, die an einer erkannten Anomalie in einer IT-Infrastruktur nach einem der vorstehenden Ansprüche beteiligt ist, **dadurch gekennzeichnet, dass** das Zusammenfassen der digitalisierten Betriebsdaten unter Anwendung eines Verfahrens auf die Daten erfolgt, das aus den Folgenden ausgewählt ist: Durchschnitt, Viertel, Minimum, Maximum.

5. Verfahren zum Bestimmen mindestens einer Maschine, die an einer erkannten Anomalie in einer IT-Infrastruktur nach einem der vorstehenden Ansprüche beteiligt ist, **dadurch gekennzeichnet, dass** das Zeitfenster eine Dauer zwischen einer Minute und einer Stunde aufweist.

6. Verfahren zum Bestimmen mindestens einer Maschine, die an einer erkannten Anomalie in einer IT-Infrastruktur nach dem vorstehenden Anspruch beteiligt ist, **dadurch gekennzeichnet, dass** das Zeitfenster eine Dauer zwischen einer Minute und zehn Minuten aufweist.

7. Verfahren zum Bestimmen mindestens einer Maschine, die an einer erkannten Anomalie in einer IT-Infrastruktur nach einem der vorstehenden Ansprüche beteiligt ist, **dadurch gekennzeichnet, dass** ein Zustandsvektor eine Dimension N zwischen fünfzig und hundert aufweist.

8. Verfahren zum Bestimmen mindestens einer Maschine, die an einer erkannten Anomalie in einer IT-Infrastruktur nach einem der vorstehenden Ansprüche beteiligt ist, **dadurch gekennzeichnet, dass** ein Zustandsvektor eine Dimension N derart aufweist, dass das Produkt NxM der Dimension je Anzahl der Maschinen eine Million nicht überschreitet.

9. Verfahren zum Bestimmen mindestens einer Maschine, die an einer erkannten Anomalie in einer IT-Infrastruktur nach einem der vorstehenden Ansprüche beteiligt ist, **dadurch gekennzeichnet, dass** das Verfahren zum Erkennen der Anomalie, das auf den Infrastrukturvektor angewendet wird, aus einem der folgenden Verfahren ausgewählt ist: Autocodieren und elliptischer Mantel, "Isolation Forest", OCSVM.

10. Verfahren zum Bestimmen mindestens einer Maschine, die an einer erkannten Anomalie in einer IT-Infrastruktur nach einem der vorstehenden Ansprüche beteiligt ist, **dadurch gekennzeichnet, dass** das Erklärbarkeitsverfahren, das auf den Infrastrukturvektor angewendet wird, aus den folgenden Verfahren ausgewählt ist: Shap, Lime, Aufmerksamkeitsschicht für neuronale Netzwerke.

11. Verfahren zum Bestimmen mindestens einer Maschine, die an einer erkannten Anomalie in einer IT-Infrastruktur nach einem der vorstehenden Ansprüche beteiligt ist, **dadurch gekennzeichnet, dass** das Zusammenfassen der Komponenten des Erklärungsvektors unter Anwendung eines Verfahrens auf die Komponenten erfolgt, das aus der Liste ausgewählt ist, die ausgebildet ist aus mindestens: Durchschnitt, Viertel, Minimum, Maximum.

12. Computerprogrammprodukt, umfassend Anweisungen, die, wenn das Programm auf einem Computer ausgeführt wird, diesen veranlassen, die Schritte des Verfahrens nach einem der Ansprüche 1 bis 10 zu implementieren.

13. Speichermedium, auf dem ein Computerprogramm gespeichert ist, um mindestens eine Maschine zu bestimmen, die am direktesten an einer erkannten Anomalie in einer IT-Infrastruktur nach Anspruch 11 beteiligt ist.

## Claims

1. A method for determining at least one machine involved in an anomaly detected in a computing infrastructure comprising a plurality M of machines, M being an integer strictly greater than 1, said method comprising the following steps implemented automatically:
- Configuration (1000) of a state vector structure of dimension N of a machine, N being an integer strictly greater than 2, said structure distributing metric-type information and log-type information in N dimensions;
- Determination (1010) of a time window duration;
- Acquisition (1020) of timestamped operating data according to the configuration of the state vector and time window duration;
- Construction (1030) of a state vector, for each of the M machines from the timestamped data acquired, according to the state vector structure configured, said construction comprising the following steps:
∘ Digitization (1032) of the data acquired according to the configuration of the state vector;
∘ Normalization (1034) of the digitized data;
∘ Aggregation (1036) of data by dimension;
- Assembly (1040) of the M vectors of N dimension into an infrastructure vector;
- Detection of an anomaly (1050) by applying an anomaly detection method to the infrastructure vector;
- For the anomaly detected, the method further comprises the following additional steps (1060):
∘ Application (1062) of an explanation method to the infrastructure vector producing an infrastructure explanation vector comprising M machine explanation vectors of N dimension;
∘ Separation (1064) of the explanation vector per machine;
∘ For each machine, aggregation (1066) of the components of the explanation vector to obtain an involvement indicator;
∘ Determination of the machine having the highest indicator, said determined machine then being considered (1068) as involved in the anomaly.

2. The method for determining at least one machine involved in an anomaly detected in a computing infrastructure according to claim 1, **characterized in that** the operating data acquired comprises metrics and lines from at least one activity log file.

3. The method for determining at least one machine involved in an anomaly detected in a computing infrastructure according to claim 1, **characterized in that** the log-type information is digitized using a method selected from the following methods: Word2VEC, BERT, GloVe.

4. The method for determining at least one machine involved in an anomaly detected in a computing infrastructure according to one of the preceding claims, **characterized in that** the digitized operating data is aggregated using, on said data, a method selected from the following: mean, quartile, minimum, maximum.

5. The method for determining at least one machine involved in an anomaly detected in a computing infrastructure according to one of the preceding claims, **characterized in that** the time window has a duration of between one minute and one hour.

6. The method for determining at least one machine involved in an anomaly detected in a computing infrastructure according to the preceding claim, **characterized in that** the time window has a duration of between one minute and ten minutes.

7. The method for determining at least one machine involved in an anomaly detected in a computing infrastructure according to one of the preceding claims, **characterized in that** a state vector has a dimension N between fifty and one hundred.

8. The method for determining at least one machine involved in an anomaly detected in a computing infrastructure according to one of the preceding claims, **characterized in that** a state vector has a dimension N such that the product NxM of the dimension multiplied by the number of machines does not exceed one million.

9. The method for determining at least one machine involved in an anomaly detected in a computing infrastructure according to one of the preceding claims, **characterized in that** the anomaly detection method, applied to the infrastructure vector, is selected from one of the following methods: autoencoder and elliptic envelope, "isolation forest", OCSVM.

10. The method for determining at least one machine involved in an anomaly detected in a computing infrastructure according to one of the preceding claims, **characterized in that** the explanation method, applied to the infrastructure vector, is selected from the following methods: SHAP, LIME, neural network attention layer.

11. The method for determining at least one machine involved in an anomaly detected in a computing infrastructure according to one of the preceding claims, **characterized in that** the aggregation of the components of the explanation vectors is achieved using, on said components, a method selected from the list formed of at least: mean, quartile, minimum, maximum.

12. A computer program product comprising instructions that, when the program is executed on a computer, lead the latter to implement the steps of the method according to any one of claims 1 to 10.

13. A storage medium on which a computer program is recorded for determining at least one machine most directly involved in an anomaly detected in a computing infrastructure according to claim 11.
